Europäisches Patentamt

European Patent Office

Office européen des brevets

(11) Publication number: **0 202 294**
**B1**

# EUROPEAN PATENT SPECIFICATION

(45) Date of publication of patent specification: **08.11.89**

(51) Int. Cl.⁴: **A 01 N 37/48,** A 01 N 43/76

(21) Application number: **85905872.9**

(22) Date of filing: **18.11.85**

(86) International application number:
**PCT/HU85/00069**

(87) International publication number:
**WO 86/03100 05.06.86 Gazette 86/12**

(54) SYNERGISTIC HERBICIDAL COMPOSITIONS.

(30) Priority: **19.11.84 HU 428184**

(43) Date of publication of application:
**26.11.86 Bulletin 86/48**

(45) Publication of the grant of the patent:
**08.11.89 Bulletin 89/45**

(84) Designated Contracting States:
**AT CH DE FR GB IT LI NL**

(56) References cited:
**EP-A-0 075 249**
**DE-A-3 240 694**

(73) Proprietor: **INNOFINANCE Altalános Innovácios Pénzintézet**
**Szabadság tér 5-6**
**H-1054 Budapest V (HU)**

(72) Inventor: **TOMANICSKA, Ferenc**
**Münnich Ferenc u 55**
**H-8360 Keszthely (HU)**

(74) Representative: **Dipl.-Ing. Schwabe, Dr. Dr. Sandmair, Dr. Marx**
**Stuntzstrasse 16**
**D-8000 München 80 (DE)**

Courier Press, Leamington Spa, England.

# EP 0 202 294 B1

**Description**

Technical field

The present invention relates to synergistic herbicidal compositions, process for combatting weeds and use of the compositions according to the invention. The compositions according to the invention are of broad activity spectrum and contain two active ingredients. The compositions are useful for killing seed sprouting monocotyledonous and dicotyledonous weeds, e.g. in corn cultures, forest nursaries, floricultures, fruit plants, wineyards, etc. One of the active ingredients of the compositions according to the invention is the methyl 5 - (2,4 - dichlorophenoxy) - 2 - nitrobenzoate (in the followings: bifenox). The other active ingredient is the racemate or one of the enantiomers of the ethyl 2 - {4 - [(6 - chloro - 2 - benzoxazolyl)oxy] - phenoxy} - propionate (in the followings: phenoxaprop-ethyl).

Background art

Both active ingredients used in the compositions and processes according to the present invention are known in the art.

Bifenox is disclosed in GB—PS No. 1 232 368, US—PS No. 3 652 645 and US—PS No. 3 776 715. Since then, many information has become known considering the use of the above active ingredient (Dest, W. M. et al., Proc. N. E. Weed Sci. Conf., 1973, *27*, 31). Bifenox has been a commercially available herbicide for years. Area of use is in the first line in rice, soybean, Sorghum, cereals, as well as corn and sunflower, against dicotyledonous weeds.

Phenoxaprop-ethyl is disclosed, e.g. in DE—OS No. 26 40 730, the herbicidal activity thereof is described by H. Bieringer et al. (Proc. Br. Crop Prot. Conf.—Weeds, 1982, *1*, 11). Phenoxaprop-ethyl is used as selective herbicide against annual and perennial grasses, especially in sugarbeet, soybean, rape, potato, sunflower, alfalfa and other dicotyledonous cultures.

Accordingly, bifenox is useful against dicotyledonous weeds in monocotyledonous crops while phenoxaprop-ethyl can be used to kill monocotyledonous weeds of dicotyledonous crops.

Certain combinations of the separate components of the compositions according to the present invention have also been known. For example certain combinations of bifenox are disclosed in CH—PS No. 578 319 in the first line for pre-emergent use, these are, however, not sufficient in wineyards and other fruit plants. EP—OS No. 0 080 758A1 discloses the combination of bifenox and 3 - tertiary - butyl - 5 - chloro - 6 - methyl - uracyl (US—PS No. 3 235 357), especially for killing weeds in wineyards an other fruit plants. EP—OS No. 0 075 249A1 describes the combination of phenoxaprop-ethyl and ethyl 2 - [4 - (6 - chloro - 2 - benzthiazolyloxy) - phenoxy] - propionate (DE—OS No. 26 40 730) which is used for selective weed control of grasses in dicotyledonous crops. The synergistic combination of phenoxaprop-ethyl and certain halophenoxy-phenoxy propionic acid esters (DE—PS No. 2 136 828, DE—PS No. 2 223 829) against grasses is disclosed in EP No. 110 178A.

Disclosure of invention

The present invention aims to provide novel herbicidal compositions and processes, respectively, which possess a more effective herbicidal effect, broader activity spectrum and besides a decreased damaging effect to the crops, i.e. a lower phytotoxicity.

The compositions and processes according to the invention meet the above requirements as no synergistic compositions and processes, respectively, have been available so far which provided a good postemergent herbicidal effect on a broad spectrum of weeds in certain plant cultures, e.g. sunflower, without inhibiting the development of the crop.

The invention is based on the recognition that when using a mixture of bifenox and phenoxaprop-ethyl of appropriate ratio as herbicide, the mixture kills both the seed sprouting monocotyledonous and dicotyledonous weeds without inhibiting the development of crops, especially sunflower.

The expression "synergistic" used in the specification means a herbicidal effect which—as discussed herebelow—exceeds the added effect of the single components which is well known for those skilled in the art.

Under "plant cultures" and "crops" not only the sunflower but also ornamental plants, forest nursaries (seedlings, young plantations), fruit plants (berries, drupulets, apple like fruit trees, etc.), as well as wineyards are to be understood.

The compositions and process, respectively, according to the present invention provide a safe herbicidal effect, e.g. against the following weeds:

| Monocotyledonous | Dicotyledonous |
|---|---|
| Avena sp. | Abutilon sp. |
| Digitaria sp. | Amaranthus sp. |
| Echininochloa sp. | Ambrosia elatier |
| Panicum sp. | Chenopodium sp. |
| Setaria sp. | Datura sp. |
| Sorghum sp. | Polygonum sp. |
| Zea mays. (residue weeds) | Solanum sp. |

2

The ratio and amount of the two active ingredients, i.e. bifenox and phenoxaprop-ethyl, used in the compositions and process according to the present invention may vary within broad range depending on the conditions, e.g. the rate of weediness, the crop species, the quality of soil, meteorological conditions, etc. The ratio of the two active ingredients in the above order may vary within the range of 20:1 to 0,5:1, preferably 10:1 to 1:1. The amount to be used falls within the range of 0,1 to 3,0 kg/ha, preferably 0,5 to 2,0 kg/ha.

The weed control by using the compositions according to the invention may be accomplished by preemergent, preferably however, by postemergent method. Reasonably, postemergent control is used in the case if the initial weed control of the crop could not be performed by any reason, e.g. due to unfavourable weather, bad soil conditions or the same was not effective enough and thus an overgrowing of weeds already dangerous to the development of the crop can be expected. The postemergent method can preferably be used if the weeds are present associated with e.g. great occurance of Ambriosa eliator weeds, such as maize, residue (wind fallen) weeds or of hardly controllable Sorghum species.

The treatment is to be accomplished preferbaly in the intensive growing state—suitably in four to eight foliage-leaf phenological phase—of the crops, e.g. sunflower, when the monocotyledonous weeds are in one to three foliage-leaf development, while the dicotyledonous weeds are in two to four foliage-leaf state. Namely, if the crop is in the six to eight foliage-leaf state, it may have a shading effect depending on the species, furthermore the treatment can cause a temporary apparent phytotoxicity.

In case of spraying, the process according to the invention can be accomplished with a spray amount of 200 to 800, preferably 200 to 300 liter/ha, using a pressure of 3 bar and medium droplet size. When the application is accomplished by aerial route, generally less amount of spray may be used as it is well known for those skilled in the art.

The object of the invention is a synergistic herbicidal composition characterized by containing in a total amount of 2 to 95% by weight and in a ratio of 20:1 to 0,5:1, preferably 10:1, methyl 5 - (2,4 - dichlorophenoxy) - 2 - nitrobenzoate (bifenox) and ethyl 2 - {4 - [(6 - chloro - 2 - benzoxazolyl) - oxy] - phenoxy} - propionate along with auxiliaries well known in the formulation technics of herbicidal compositions and optionally with safeners.

A further object of the invention is the process for killing undesirable plants, i.e. weeds and residue (wind fallen) weeds, wherein the soil or the area containing the seeds or sprouts of the undesired plants or overgrown by the said undesired plants is treated with the above synergistic herbicidal compositions in an amount of 0,1 to 3,0 kg/ha, preferably 0,5 to 2,0 kg/ha of active compounds.

According to the invention the two active ingredients, i.e. bifenox and phenoxyprop-ethyl are formulated into compositions by methods known per se [R. Wegler: Chemie der Pflanzenschutz- und Schädlingsbekämpfungsmittel Band 1 (Springer-Verlag Berlin Heidelberg New York 1970) 42—51, Catalogue of Pesticide Formulation Types and International Coding System, Technical Monograph No. 2, GIFAP]. The formulation may be present in the form of wetting powders (WP), emulsifiable concentrations (EC), suspension concentrates (SC), granulates (G) or microgranulates (MG), ultra-low volume form (ULV), tank mixtures, etc. To obtain the above compositions the active ingredients are mixed with solid or liquid inert carriers, solvents and—if desired—other auxiliaries.

Solid carriers and diluents are the inactive mineral materials, e.g. kaolinit, bentonit, diatomaeous earth or highly dispersed synthetic diatomaeous earth, calcium carbonate, calcinated magnesia, Fuller earth, wooden meal, etc.

Examples of liquid carriers, diluents and solvents are the following: water, organic solvents or solvent mixtures, e.g. methanol, n- and i-propanol, benzyl alcohol, glycols, such as propylene glycol, the esters thereof, like methyl-cellosolve, methyl ethyl ketone, methyl isobutyl ketone, cyclohexanon, etc., esters, such as ethyl acetate, n- and i-butyl acetate, isopropyl miristate, dioctyl phtalate, etc., aromatic, aliphatic and alicyclic hydrocarbons, like the paraffin hydrocarbons, cyclohexane, toluene, xylene, mixtures of alkyl benzenes, lactones, such as gamma-butyrolactone, etc., lactames, such as N-methyl-pyrrolidone, amides, like dimethylformamide, etc., vegetable and animal oils, such as sunflower oil, castor oil, sperm oil, etc.

Suitable auxiliaries are the surface active agents like wetting agents, suspending, dispersing agents, emulsifiers, anticoagulants, adhesives, penetration promoting agents, biological activity enhancing agents, antifoaming agents, etc.

The wetting, dispersing and emulsifying agents, the adhesion enhancing agents and anti-coagulants can be ionic or non-ionic materials.

The ionic auxiliaries are the salts of saturated and unsaturated carboxylic acids, the aliphatic, aromatic and aliphatic-aromatic hydrocarbon sulfonates; the alkyl, aryl and aralkyl alcohol sulfates; the sulfonates of alkyl-, aryl- and aralkyl esters or ethers; the sulfonates of phenol, cresol and naphthalene condensation products; the sulfated vegetable or animal oils; alkyl-, aryl- and aralkyl phosphate esters or the salts of the above compounds formed with alkali and alkali earth metals or organic bases. These compounds include among others sodium lauryl sulfate, dodecyl benzene sulfonic acid sodium, ethanolamine, diethanolamine, triethanolamine and isopropylamine salts, sodium mono- and diisopropyl naphtalene sulfonate; sodium diisooctyl sulfosuccinate, soft soaps, the sodium, potassium, calcium, aluminium and magnesiumstearate, etc. The anionic surfactants also include the disodium N-octadecyl sulfosuccinate, lignosulfonate, etc.

Non-ionic wetting, dispersing agents and emulsifiers are e.g. the ethers of ethylene oxide formed with

$C_{1-20}$ alcohols, like oleyl-polyoxyethylene; the alkyl phenol ethers, such as polyglycolethers formed with nonylphenols; esters of organic acids, such as esters of stearic acid and myristic acid with polyethylene glycol; the ethylene oxyd, propylene oxyd block polymerisates; partial esters of fatty and oil acids formed with hexit anhydrides, such as esters of sorbit with stearic acid, etc.

Adhesion enhancing agents are the alkali earth soaps, the sulphosuccinic ester salts, the natural and artificial water-soluble macromolecules, such as casein, starch, cellulose ethers, hydroxyethyl cellulose, polyvinylpyrrolidon, etc.

Sufficient antifoaming agents include the lower polyoxyethylene block polymerisates, higher alcohols, such as octylalcohol, etc., special silicon oils, etc.

For preparing wetting powders the two active ingredients, as well as the auxiliary(ies) surfactant(s) and the carriers are mixed, milled and finally homogenized. In case of using a liquid surfactant, the same might be applied on the solid organic material or inorganic diluents or on the powder mixture also containing the solid active ingredient by any way, e.g. spraying. Another possibility of the formulation in case of using a liquid surface active material is that the previously milled solid components are suspended in an organic solvent containing the liquid surfactant(s). Afterwards the suspension may be dried, e.g. by vaporization, thus the surfactant will be applied on the surface of the solid active compound and solid diluents.

The emulsifiable concentrates which are useful for preparing aqueous emulsions, can be prepared by dissolving the two active ingredients together with any of the aforementioned surfactant(s) and emulsifiers in a water-immiscible solvent. The emulsifiable concentration thus obtained forms a spray emulsion with water—optionally by the effect of only slight mechanical operation—which is stable even during longer storaging.

For preparing suspension concentrates (SC) the wetting and dispersing agents are dissolved—if desired by heating—in the mixture of water and an antifreezing component (e.g. glycerol). To this solution are added the two active ingredients and if desired, an anti-coagulant. The particle-liquid system thus obtained is ground to the desired particle size—generally about max. 5 µm—by using wet grinding mill. After grinding—if desired—antifoaming agent is added during homogenization. The above order of mixing the components may be changed.

The ULV compositions can be prepared by methods known for preparing the EC formulation.

Granulates ready for use (G) can be obtained e.g. by extruding, so that a particulate carrier (e.g. ground lime) or a sorptive carrier is moistened with a solution of the two active ingredients and then dried.

The granulates for use to spray (WC) can easily be obtained by starting from WP and/or SC and using well known agglomeration technology, e.g. in dragée pan, using a binding agent.

The final sprays or dusting formulations which regularly contain the active ingredient in a concentration of less than 5% by weight, preferably 1,0 to 0,1% by weight, to be used in the agricultural technology can be obtained from the above formulations by methods known per se, such as by dilutions with water or inert solid diluents.

Another possibility of application is that two compositions each containing one of the two active ingredients are worked up into tank mixtures by adding to water while stirring, before use.

The examples herebelow serve for a better illustration of the invention without limiting the scope of protection to the specific embodiments.

Formulations examples

The amount of the single components within the compositions according to the invention are given in % by weight.

Emulsifiable concentrates
Examples 1 to 3

| Component | Examples | | |
|---|---|---|---|
| | 1 | 2 | 3 |
| Bifenox | 18% | 20% | 20% |
| Fenoxaprop-ethyl | 2% | 10% | 20% |
| Xylene | 60% | 39% | 10% |
| Cyclohexanon | — | 20% | 20% |
| Isophoron | 5% | — | 20% |
| Ethoxylated castor oil | 5% | 1% | 2% |
| Anionic and non-ionic surfactant | 3% | 10% | 3% |
| Alkylaryl sulphonate | 7% | — | 5% |
| Bifenox:phenoxaprop-ethyl ratio | 9:1 | 2:1 | 1:1 |

Examples 4 to 6

| Component | Examples | | |
|---|---|---|---|
| | 4 | 5 | 6 |
| Bifenox | 80% | 30% | 25% |
| Phenoxyprop-ethyl | 10% | 10% | 25% |
| Finely dispersed diatomaceous earth | 2% | 10% | 20% |
| Kaolinite | — | 30% | 10% |
| Lignosulfonate | 5% | — | 3% |
| Alkylnaphtalene sulfonic acid sodium salt | 3% | 3% | 2% |
| Non-ionic wetting agent | — | 5% | 3% |
| Diatomaceous earth | — | 12% | 12% |
| Bifenox:phenoxyprop-ethyl ratio | 8:1 | 3:1 | 1:1 |

# EP 0 202 294 B1

### Suspension concentrates (SC)
### Examples 7 to 9

| Component | Examples | | |
|---|---|---|---|
| | 7 | 8 | 9 |
| Bifenox | 30% | 40% | 45% |
| Phenoxaprop-ethyl | 5% | 5% | 5% |
| Ethylene glycol | 10% | 10% | 8% |
| Ethylene oxyd/propylene oxyd block polymer | 2% | 1% | — |
| Calcium lignosulfate | — | 2% | 2% |
| Phenol sulfonic acid condensate sodium salt | — | 1% | — |
| Nonylphenol polyethylene glycol ether (10 EtO) | 2% | — | 2% |
| Anionic polysaccharide | 0,2% | 0,1% | — |
| Silicon antifoaming agent | 1,0% | 1,0% | 1,5% |
| Synthetic silica | — | 0,2% | 0,5% |
| Deionized water ad 100 | | | |
| Bifenox: phenoxaprop-ethyl ratio | 6:1 | 8:1 | 9:1 |

### Granulates (G)
### Examples 10, 11

| Component | Examples | |
|---|---|---|
| | 10 | 11 |
| Bifenox | 8% | 4,5% |
| Phenoxaprop-ethyl | 2% | 0,5% |
| Ground lime | — | 69% |
| Granulated diatomaceous earth | 79% | — |
| Ethylene glycol | — | 3% |
| Calcium lignosulfonate | — | 3% |
| Deionized water | — | 15% |
| Xylene | 10% | — |
| Blend of anionic and non-ionic wetting agents | 1% | — |
| Colloidal diatomaceous earth | — | 5% |
| Bifenox:phenoxyprop-ethyl ratio | 4:1 | 9:1 |

6

Example 12
Small plot tests

On loamy brown forest soil plots (8,3×2,5 m=20,75 m$^2$) NS-H-26 sunflower hybrid was sown, in four parallel tests. No treatment was accomplished either before or after sowing (ppi, pre). The emerged sunflower plants in the four to eight foliage-leaf stadium (most of the plants possessed six foliage leaves) were treated with a spray prepared by diluting of the emulsion concentrates containing bifenox (phenoxaprop-ethyl in the ratio of 2 to 1, 4 to 1 and 8 to 1, respectively, with water. The applied spray was of medium droplet size in an amount of 300 liter/ha. The treatment was accomplished at a pressure of 3 bar. In the time of treatment the dicotyledonous weeds were of 2 to 6 (mostly 4) leaves stadium, the monocotyledonous weeds were of 1 to 3 leaves development. The individual plots were observed and evaluated 2 and 4 weeks after treatment as well as at the time of harvesting. The results were evaluated by EWRC (European Weed Research Council) methods and the harvest was weighed at the end of the test.

In Tables 1 and 2 the herbicidal activity and phytotoxicity index of the compositions according to the invention are expressed in EWRC values. The synergistic effect was calculated by Colby method and is shown on Table 3. The harvest results are shown on Table 4.

TABLE 1
Activity of the compositions according to the invention against certain important weeds

| Test No. | Active ingredient | Dosis of active ingredient g/ha | Weight ratio of active ingredients | Herbicidal activity in EWRC values | | | | |
| --- | --- | --- | --- | --- | --- | --- | --- | --- |
| | | | | Ambrosia elatior | Chenopo-dium album | Polygonum lapathifo-lium | Echinochloa crus-galli | Setaria glauca |
| 1 | Bifenox | 360 | — | 4 | 4 | 3 | 8 | 9 |
| 2 | Bifenox | 720 | — | 3 | 3 | 2 | 7 | 7 |
| 3 | Phenoxaprop-ethyl | 90 | — | 9 | 8 | 8 | 8 | 2 |
| 4 | Phenoxaprop-ethyl | 180 | — | 8 | 7 | 7 | 1 | 1 |
| 5 | Bifenox+phenoxaprop-ethyl | 360+180 | 2:1 | 2 | 2 | 1 | 1 | 1 |
| 6 | Bifenox+phenoxaprop-ethyl | 360+90 | 4:1 | 2 | 2 | 2 | 2 | 2 |
| 7 | Bifenox+phenoxaprop-ethyl | 720+90 | 8:1 | 1 | 1 | 1 | 1 | 1 |
| 8 | Bifenox+diklophop-methyl (control) | 720+1080 | 0,7:1 | 1 | 1 | 1 | 1 | 1 |
| 9 | Untreated control | dominance % | | 20 | 15 | 10 | 15 | 10 |

EP 0 202 294 B1

## TABLE 2
### Phytotoxicity index of the compositions according to the invention on sunflower (in ERWC values)

| Test No. | Active ingredient | Dosis of active ingredient g/ha | Weight ratio of active ingredients | Phytotoxicity index 2 weeks after treatment |
|---|---|---|---|---|
| 1 | Bifenox | 360 | — | 2 |
| 2 | Bifenox | 720 | — | 3 |
| 3 | Phenoxaprop-ethyl | 90 | — | 2 |
| 4 | Phenoxaprop-ethyl | 180 | — | 2 |
| 5 | Bifenox+phenoxaprop-ethyl | 360+180 | 2:1 | 3[x] |
| 6 | Bifenox+phenoxaprop-ethyl | 360+90 | 4:1 | 2[x] |
| 7 | Bifenox+phenoxaprop-ethyl | 720+90 | 8:1 | 3[x] |
| 8 | Bifenox+diklophop-methyl (control) | 720+1080 | — | 5 |

[x]=The phytotoxicity of the compositions used in tests Nos. 5, 6 and 7 already substantially decreased on the 4th week after treatment and completely disappeared in the term preceding the harvest. On the contrary, the phytotoxicity of the combination used as control (Test No. 8) remained unchanged during the whole time of the test.

It can be seen from Tables 1 and 2 that the compositions according to the invention
a) effectively control both the monocotyledonous and dicotyledonous weeds,
b) possess a minimal phytotoxicity on sunflower and even the same disappears with the development of plants which is supported by the harvest results (see Table 4),
c) according to the EWRC evaluation, the herbicidal activity is good and the phytotoxicity is good to acceptable (see Test No. 8).
The synergistic effect was calculated according to the Colby equation and is expressed as a single value for the weeds in each of the treatments according to Table 1 (see Table 3).

## TABLE 3
### Synergistic effect of the compositions according to the invention

| Test No. | Active ingredient | Dosis of active ingredient g/ha | Weight ratio of the active ingredients | $E_1$ | $E_2$ |
|---|---|---|---|---|---|
| 1 | Bifenox | 360 | — | 24,50 | — |
| 2 | Bifenox | 720 | — | 13,20 | — |
| 3 | Phenoxaprop-ethyl | 90 | — | 42,50 | — |
| 4 | Phenoxaprop-ethyl | 180 | — | 25,25 | — |
| 5 | Bifenox+phenoxaprop-ethyl (control) | 360+180 | 2:1 | 0,70 | 6,18 |
| 6 | Bifenox+phenoxaprop-ethyl | 360+90 | 4:1 | 2,45 | 10,41 |
| 7 | Bifenox+phenoxaprop-ethyl | 720+98 | 8:1 | 0,00 | 5,61 |

Table 3 shows that compared to the bifenox and phenoxaprop-ethyl, respectively, when used alone, the activity of the compositions according to the invention (Tests Nos. 5, 6 and 7) increases in a synergistic way and the phytotoxic effect on sunflower does not increase proportionally.

# EP 0 202 294 B1

### TABLE 4
#### Harvest results

| Test No. | Active ingredient | Dosis of active ingredient g/ha | Weight ratio of the active ingredients | Harvest kg/ha |
|---|---|---|---|---|
| 1 | Bifenox+phenoxaprop-ethyl | 360+180 | 2:1 | 2190 |
| 2 | Bifenox+phenoxaprop-ethyl | 360+90 | 4:1 | 2173 |
| 3 | Bifenox+phenoxaprop-ethyl | 720+90 | 8:1 | 2240 |
| 4 | Bifenox+diklophop-methyl (control) | 720+1080 | — | 1580 |
| 5 | Untreated control | — | — | 2200 |

From the above table it can be seen that weed control performed by the compositions according to the invention does not influence the harvest (when compared with the untreated control) in contrary to the compositions used in Test No. 4 as control.

## Claims

1. Synergistic herbicidal composition, characterized by containing as active ingredients methyl 5 - (2,4 - dichlorophenoxy) - 2 - nitrobenzoate (bifenox) and ethyl 2 - {4 - [(6 - chloro - 2 - benzoxazolyl)oxy]phenoxy}propionate (phenoxaprop-ethyl), if desired along with an antidote.

2. Composition according to claim 1, characterized by containing at least one agriculturally acceptable carrier in an amount of 2 to 96% by weight.

3. Composition according to claims 1 or 2, characterized by containing the racemate of phenoxaprop-ethyl.

4. Composition according to any of claims 1 to 3, characterized by containing one of the enantiomers, preferably the d-form of phenoxaprop-ethyl.

5. Composition according to any of claims 1 to 4, characterized by containing bifenox and phenoxaprop-ethyl in a weight ratio of 20:1 to 0,5:1.

6. Composition according to any of claims 1 to 5, characterized by containing the bifenox and phenoxaprop-ethyl in a weight ratio of 10:1 to 1:1.

7. Process for controlling undesirable plants (weeds and residue—wind fallen—weeds), characterized by treating the soil or the area overgrown by the undesired plants or the seeds and seedlings thereof, with a composition containing the active compound combination according to any of claims 1 to 6 in an amount of 0,1 to 3,0 kg/ha.

8. Method according to claim 7, characterized by performing the treatment with an active ingredient combination of 0,5 to 2,0 kg/ha.

9. Method according to claims 7 and 8, characterized by postemergent treatment in sunflower culture.

10. Use of compositions according to any of claims 1 to 6, for controlling undesirable plants.

## Patentansprüche

1. Synergistische herbizide Zusammensetzung, dadurch gekennzeichnet, daß sie als aktive Bestandteile Methyl - 5 - [2,4 - dichlorphenoxy] - 2 - nitrobenzoat - (bifenox) und Ethyl - 2 - {4 - [(6 - chlor - 2 - benzoxazolyl) - oxy] - phenoxy} - propionat - (phenoxypropethyl), gegebenenfalls zusammen mit einem Antidot enthält.

2. Zusammensetzung nach Anspruch 1, dadurch gekennzeichnet, daß sie wenigstens einen landwirtschaftlich annehmbaren Träger in einer Menge von 2 bis 96 Gew.-% enthält.

3. Zusammensetzung nach Anspruch 1 oder 2, dadurch gekennzeichnet, daß sie das Racemat von Phenoxyapropethyl enthält.

4. Zusammensetzung nach einem der Ansprüche 1 bis 3, dadurch gekennzeichnet, daß sie eines der Enantiomere, vorzugsweise die d-Form von Phenoxypropethyl, enthält.

5. Zusammensetzung nach einem der Ansprüche 1 bis 4, dadurch gekennzeichnet, daß sie Bifenox und Phenoxapropethyl in einem Gewichtsverhältnis von 20:1 bis 0,5:1 enthält.

6. Zusammensetzung nach einem der Ansprüche 1 bis 5, dadurch gekennzeichnet, daß sie Bifenox und Phenoxapropethyl in einem Gewichtsverhältnis von 10:1 bis 1:1 enthält.

7. Verfahren zur Kontrolle unerwünschter Pflanzen/Unkräuter und vom Wind herangetragene restliche Unkräuter, dadurch gekennzeichnet, daß der mit den unerwünschten Pflanzen oder Samen und deren Sämlingen überwachsene Boden oder das Gebiet mit einer Zusammensetzung behandelt wird, die die aktive Kombination der Verbindung nach einem der Ansprüche 1 bis 6 in einer Menge von 0,1 bis 3,0 kg/ha enthält.

8. Verfahren nach Anspruch 7, dadurch gekennzeichnet, daß die Behandlung mit einer Kombination des aktiven Bestandteils von 0,5 bis 2,0 kg/ha durchgeführt wird.

9. Verfahren nach den Ansprüchen 7 und 8, gekennzeichnet durch eine Behandlung nach dem Auftreten in einer Sonnenblumenkultur.

10. Verwendung der Zusammensetzungen nach einem der Ansprüche 1 bis 6 zur Kontrolle unerwünschter Pflanzen.

**Revendications**

1. Composition herbicide synergique, caractérisée en ce qu'elle contient comme ingrédients actifs le 5 - (2,4 - dichlorophénoxy) - 2 - nitrobenzoate de méthyle (bifenox) et le 2 - {4 - [(6 - chloro - 2 - benzoxazolyl)oxy] - phénoxy} - propionate d'éthyle (phénoxapropethyl), si on le désire avec un antidote.

2. Composition selon la revendication 1, caractérisée en ce qu'elle contient au moins un support agricole acceptable en une quantité de 2 à 96% en poids.

3. Composition selon les revendications 1 ou 2, caractérisée en ce qu'elle contient le racémate de phénoxaprop-ethyl.

4. Composition selon l'une quelconque des revendications 1 à 3, caractérisée en ce qu'elle contient l'un des énantiomères, de préférence la forme d du phénoxaprop-ethyl.

5. Composition selon l'une quelconque des revendications 1 à 4, caractérisée en ce qu'elle contient du bifenox et du phénoxaprop-ethyl dans un rapport pondéral de 20:1 à 0,5:1.

6. Composition selon l'une quelconque des revendications 1 à 5, caractérisée en ce qu'elle contient le bifenox et le phénoxaprop-ethyl dans un rapport pondéral de 10:1 à 1:1.

7. Procédé pour détruire les plantes indésirables (mauvaises herbes et mauvaises herbes décidues résiduelles), caractérisé en ce qu'on traite le sol ou la zone recouverte par les plantes indésirables ou les semences ou plantes de semis avec une composition contenant la combinaison de composés actifs selon l'une quelconque des revendications 1 à 6 en une quantité de 0,1 à 3,0 kg/ha.

8. Procédé selon la revendication 7, caractérisé en ce qu'on procède au traitement avec une combinaison d'ingrédients actifs de 0,5 à 2,0 kg/ha.

9. Procédé selon les revendications 7 et 8, caractérisé par un traitement de post-levée dans une culture de tournesol.

10. Utilisation des compositions selon l'une quelconque des revendications 1 à 6 pour combattre les plantes indésirables.